# EUROPEAN PATENT SPECIFICATION

(11) **EP 1 687 995 B1**
(45) Date of publication and mention of the grant of the patent: **07.04.2010**
(21) Application number: 03776123.6
(22) Date of filing: 28.11.2003
(51) Int. Cl.: H04W 28/26

(54) **A METHOD AND AN ARRANGEMENT FOR TRANSPORT LAYER CONTROL SIGNALLING IN UTRAN SUPPORTING BOTH ATM AND IP TRANSPORT TECHNOLOGIES**
VERFAHREN UND ANORDNUNG ZUR TRANSPORTSCHICHT-STEUER-ZEICHENGABE IN UTRAN BEI UNTERSTÜTZUNG SOWOHL VON ATM- ALS AUCH VON IP-TRANSPORTTECHNOLOGIE
PROCEDE ET DISPOSITIF POUR LA SIGNALISATION DE COMMANDE D'UNE COUCHE DE RESEAU DE TRANSPORT DANS UN RESEAU UTRAN ACCEPTANT LES TECHNIQUES DE TRANSPORT ATM ET IP

(43) Date of publication of application: 09.08.2006
(73) Proprietor: Telefonaktiebolaget LM Ericsson (publ), 164 83 Stockholm (SE)
(72) Inventor: ANTAL, Csaba, H-2340 Kiskunlachaza (HU); MUSIKKA, Niilo, S-167 75 Bromma (SE); BADER, Attila, H-2151 Fot (HU); WESTBERG, Lars, S-745 96 Enköping (SE)
(74) Representative: Kühn, Friedrich Heinrich
(86) International application number: PCT/SE2003/001838
(87) International publication number: WO 2005/053333

(56) References cited:
- EP-A2- 0 917 390
- WO-A1-03/019897
- US-A- 2001 053 145
- VENKEN K, ET AL.: 'Designing a Diffserv-Capable IP-Backbone for the Utran' 3G MOBILE COMMUNICATION TECHNOLOGIES 26 March 2001 - 28 March 2001, pages 47 - 52, XP002958436
- ETSI TR 125 933 V5.0.0 (2002-03) Technical Report, Universal Mobile Telecommunications System (UMTS); IP transport in UTRAN (3GPP TR 25.933 version 5.0.0 Release 5) XP002958433

## Description

### Field of the invention

The present invention relates to a method and an arrangement in a mobile telephone network. In particular, it relates a method and an arrangement for transport network layer (TNL) control signalling in a Universal Mobile Telephony System Terrestrial Radio Access Network (UTRAN).

### Background

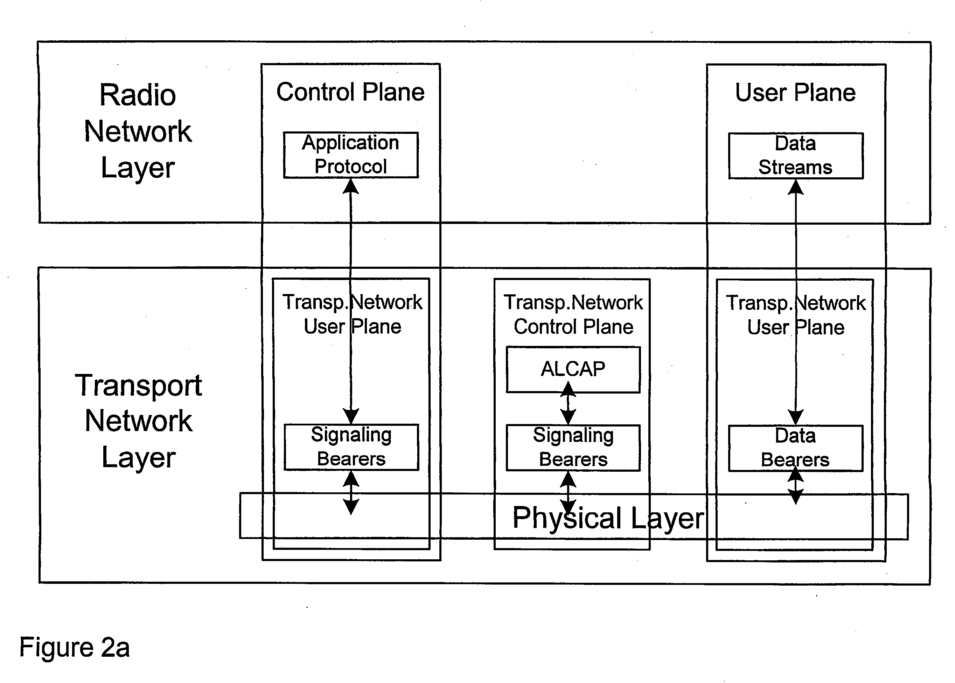

UMTS Terrestrial Radio Access Network (UTRAN) is the Radio Access Network (RAN) of 3^{rd} generation mobile networks specified by 3GPP standardisation organization. The general protocol model of UTRAN Interfaces is shown in **figure 2a****.** The protocol model can be split up into two logically independent layers: a Radio Network Layer (RNL) and a Transport Network Layer (TNL), and orthogonally into User and Control planes as further described in 3GPP TS 25.401, 3GPP, TSG RAN: UTRAN overall description.

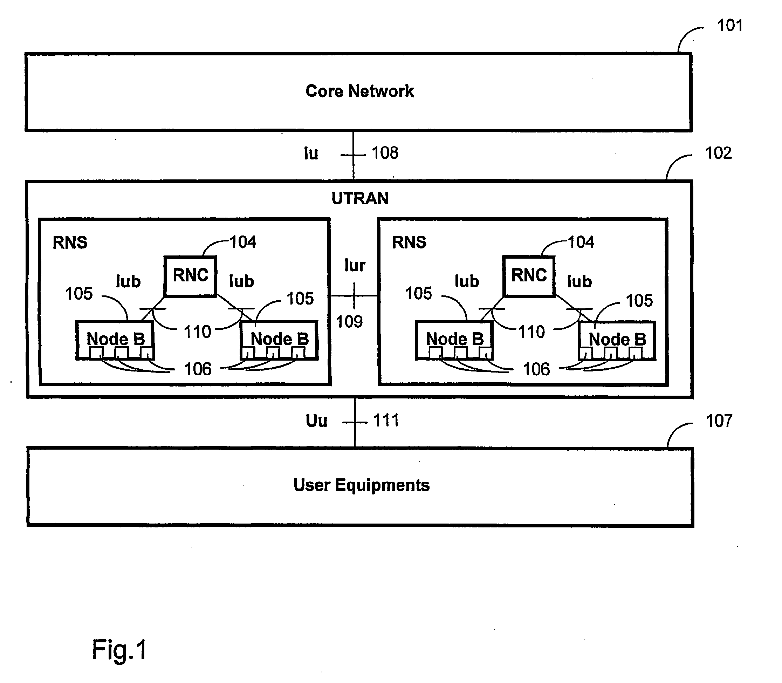

According to **figure 1****,** the main parts of the UTMS are a core network 101, the UTRAN 102, and user equipments (UE) 107 also referred to as mobile terminals. The interface between the core network 101 and the UTRAN 102 is called the Iu interface 108, and the interface between the UTRAN 102 and the user equipments 107 is called the Uu interface 111. The UTRAN 102 comprises a Radio Network Subsystems (RNS) 103. The interface between two RNSs is called the Iur interface 109. The RNS 103 comprises an RNC 104 and one or more Node Bs 105 also referred to as base stations. The interface between the RNC 104 and the Node B 105 is called the Iub interface 110. The coverage area of the Node B, i.e. cell, is denoted with 106.

As a general tendency, earlier versions of UTRAN are based on ATM while new versions will be based on IP technology. Mixed ATM and IP based networks are also possible. There are significant differences between the two transport technologies, which are the consequence that ATM is connection oriented while IP is connection-less transport method.

In ATM based UTRAN, user data uses AAL2 while TNL signalling uses AAL5 protocols. AAL2 and AAL5 connections are transported in Virtual Connections (VC) and Virtual Paths (VP), which are configured by management system or by ATM signalling. For different type of user traffic, different service categories are defined such as Constant Bitrate (CBR), Variable Bitrate (VBR), Unspecified Bitrate (UBR) , which are characterized by different traffic parameters. The required Quality of Service (QoS) is ensured by Call Admission Control mechanism (CAC) running for each VP/VC.

IP will be introduced in future UTRAN releases, so a migration path has to be planned from ATM to IP. Smooth migration from ATM to IP transport technology in UTRAN requires the co-existence of ATM and IP based network parts. Interoperability between ATM and IP network parts for Iu, Iur, Iub interfaces as illustrated in **figure 1** has to be provided. If the nodes do not support both ATM and IP technology an Inter-working Unit (IWU) has to operate between ATM and IP network parts.

The currently available and basic solution for Transport Network Control Plane for AAL2/ATM network is Q.2630 signalling as described in ITU-T Recommendation Q.2630.2: "AAL type 2 signalling protocol (Capability Set 2)"]. Q.2630 is used to establish AAL2 connections in ATM UTRAN network but Q.2630 signalling is not suitable to configure ATM layer. In ATM UTRAN permanent and semi-permanent VPs and VCs are used, which are configured manually by a management system.

In IP networks, packets are routed by standard IP routing protocols and IP based transport protocols provide reliable or not reliable transport service for IP packet delivery. For QoS provisioning in an IP network in which different traffic types are transported during the same time period, two fundamentally different architectures are developed: Integrated Services (IntServ) and Differentiated Services (DiffServ). In IntServ, resources in routers are provided for each traffic flow, while in DiffServ traffic types are classified based on their Per Hop Behaviour (PHB) and resources are provided usually per PHB.

Resource Management in DiffServ (RMD) method, described in L. Westberg et.al.: "Resource Management in DiffServ Framework", Internet Draft, Work in Progress, 2001; L. Westberg et.al.: "Resource Management in DiffServ (RMD): A Functionality and Performance Behavior Overview", Protocols for High Speed Networks, 2002, Berlin may be used for dynamic resource management in IP networks. In RMD, resource management is done in two scales: per flow reservation is done in edge node while per traffic class reservation, or measurement based reservation is done in edge nodes. The mayor advantage of RMD comparing to IntServ based reservation methods is its scalability and lightweight protocol implementation in interior nodes.

US 2001/0053145 discloses a multi-layer telecommunication system which includes an application layer (e.g. a radio network layer of a wireless telecommunciation system ) and a transport layer where differing transport technologies are interworked without terminating the application layer signalling or without involving a technology interworking in the control plane of the application layer.

EP 0 917 390 discloses a method and a network architecture for mapping IP multicast and Integrated Services (i.e. differing levels of quality of service) over ATM networks based upon multicast switches. The method and architecture allow IP/Resource Reservation Protocol (RSVP) applications running on ATM hosts to seamlessly participate in Internet-wide-multicast sessions.

ETSI TR 124 933 v5.0.0 (2002-03) is a technical report produced by the 3rd Generation Partnership Project (3GPP) discussing introduction of "IP Transport" option in UTRAN. The report discloses different proposals for ATM/IP Interworking.

VENKEN K, ET AL "Designing a Diffserv-Capable IP-Backbone for the UTRAN", 3G Mobile Communication Technologies 26-28 March 2001, discusses introduction of IP-transport in UTRAN. The article states that for an IP-access backbone of UTRAN, mainly QoS-issues are important and recognizes that several possibilities exist to provide sufficient QoS such as overprovisioning, an IntServ IP-backbone or a DiffServ UTRAN. A DiffServ capable IP-backbone is suggested as advantageous to use. The article further discloses that new traffic is accepted into the DiffServ network with statistical guarantees rather than deterministic guarantees and further discloses transport of all channels between RNC and Node B in a single statically provided stream. Hence the article discloses use of a static DiffServ solution without transport network signalling between RNC and Node B.

For TNL Control in IP based UTRAN network, the IP based TNL Signalling protocol IP-ALCAP is used. IP-ALCAP is under specification in 3GPP [3GPP TSG RAN WG3: R3-021366 "A2IP Signalling Protocol (Q.IPALCAP Spec. draft)" 2002; WO 03/019897 A1 shows a solution for interworking between IP-ALCAP and Q.2630. QoS is ensured by resource over-provisioning in IP routers or by using complex resource reservation schemes that require reservation states for each connection, for example using IntServ method in IP-ALCAP. The available protocol Stacks in TNL Control Plane and User Plane are shown in **Figure 2a**, for the Iub Interface.

The motivations to introduce IP transport in UTRAN are e.g. that it provides better support of mixed traffic types in narrow links, an increasing number of IP based applications, and IP based operating and maintenance. Further advantages are that IP is independent of data-link layer, high deployment of IP routers reduces their price, and that dynamic update of routing tables and auto-configuration capabilities may be used

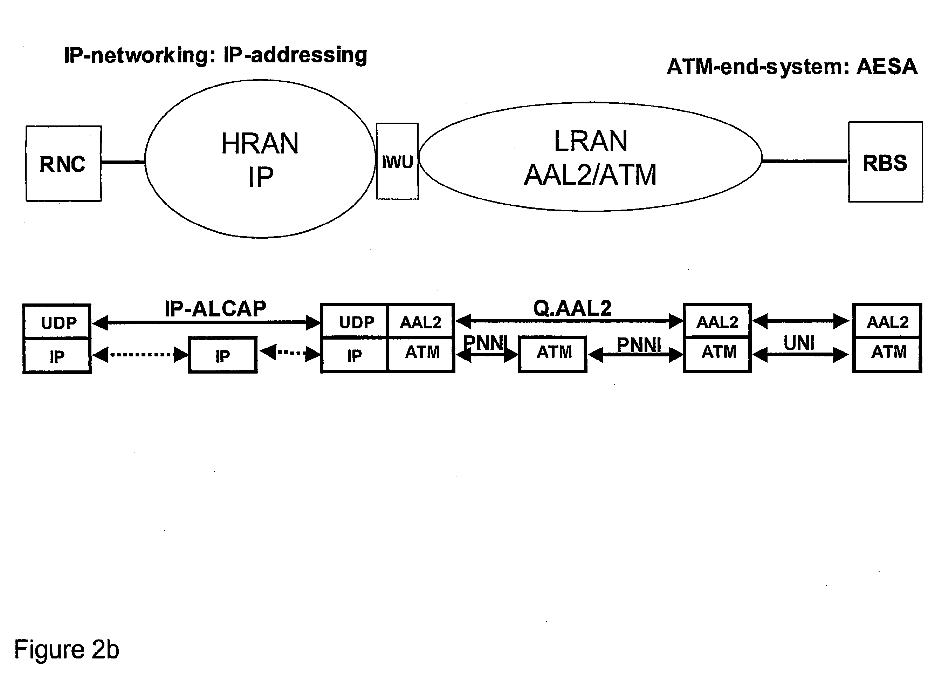

Mixed ATM and IP transport is also possible. In a typical mixed ATM-IP network the Higher Layer RAN (HRAN) is IP based and the Lower Layer RAN (LRAN) is ATM based and an Inter-working Unit (IWU) operates between the ATM and IP network parts. In the IWU, Q.AAL2 and IP-ALCAP messages have to be translated. See **figure 2b****.**

Examples of drawbacks of the IP-ALCAP solution described above are listed below:
Standard IP-routing protocols do not inter-operate with IP-ALCAP. IP-ALCAP is based on per-hop bi-directional connection establishment, like Q.2630, therefore the routing is static. In case of a link or a node failure or in case of congestion in a link, connections has to be terminated and a new connection has to be established between the RNC and the Node B.

It is not suitable to use IP-ALCAP for making resource reservations in IP routers and Diffserv based resource reservation scheme like RMD cannot be used. In addition, it is not possible to use IP-ALCAP soft-state resource management, as in RSVP.

The standard solutions for ATM/AAL2 based UTRANs also described above have the following drawbacks:
To allow dynamic setup of ATM VCs, an ATM signalling protocol is needed, which is independent of Q.AAL2 signalling used for establishing user connections. As VCs configuration changes rarely, it is not worth to implement a separate signalling protocol for this purpose. Therefore, ATM layer VCs and VPs are typically configured manually via the management system.

A mixed IP and ATM/AAL2 network suffers from the following drawbacks:

In a mixed ATM-IP network, two different protocols have to be used to set up an AAL2 connection: Q.AAL2 in the ATM part and IP-ALCAP in IP part. Interworking function for TNL Control Plane is needed between ATM and IP part.

In a mixed ATM-IP network, two addressing structures are used, IP addressing in the IP part and ATM End System Addresses (AESAs) in the ATM part, which complicates addressing. In the RNC, the address translation between the IP and the ATM is needed and the ATM and the IP address tables have to be maintained.

Migration from ATM to IP is possible only in large steps, with significant immediate investment: In the IP part, both hardware and software for control plane have to be replaced. Future Link Layer technologies, such as Ethernet, MPLS, optical switching will require the implementation of new TNL signalling protocols.

### Summary of the invention

Thus, an object of the present invention is to provide an improved transport network control signalling that overcomes the above-mentioned drawbacks.

That is achieved by a method according to claim 1 and an arrangement according to claim 19.

Preferred embodiments of the invention are defined by the dependent claims.

Advantages with the present invention are the following:
The present invention makes it possible to use standard IP based routing and management, which allows more auto-configuration and more flexible fault handling. By using RSVP - TE extended with RMD objects, it is possible to perform DiffServ based resource reservation.
The present invention is also adapted for bi-directional signalling and soft reservation states may be used which results in simpler signalling and more robust design.

Introduction of RSVP-TE based signalling offers smaller migration steps from ATM to IP. As a first migration step, Control Plane may be changed to IP based RSVP-TE, requiring only software update in RNC and Node B. Then User Plane can be changed to IP starting from HRAN. Future Link Layer technologies, such as Ethernet, MPLS, optical switching, may also be adopted to UTRAN more easily. Thus, the RSVP-TE based signalling solution may be used to control AAL2/ATM TNL in UTRAN. The signalling solution according to the present invention may also be used to control mixed AAL2/ATM and IP based TNL in UTRAN, therefore no inter-working function or very lightweight interworking function in TNL is required in the mixed IP-ATM based UTRAN.

ATM and AAL2 layers can be controlled by one protocol, in contrast to the prior art solution, in which Q.AAL2 signalling is used for controlling the AAL2 layer and a management system is used to configure the ATM layer.

Another advantage with the solution according to the present invention is that it is possible to perform dynamic configuration of the ATM layer while in the prior art solution with Q.AAL2 and the management system, permanent VCs and VPs are used.

IP, ATM and AAL2 layers can be controlled by one protocol. This feature reduces required signalling and operating and maintenance costs.

Since a standard IP based management system is used, IP addressing and DNS naming structures are used which implies that the ATM ASEA is not required.

In AAL2/ATM part the same AAL2 Admission Control can be used as in case of Q.AAL2 signalling.

### Brief description of the drawings

For a more complete understanding of the invention, reference is made to the following detailed description taken in conjunction with the accompanying drawings wherein:
**Figure 1** illustrates schematically a UTRAN wherein the present invention may be implemented.
**Figure 2a** shows schematically the logical splitting of the UTRAN protocol model.
**Figure 2b** shows schematically a migration step from ATM to IP in a UTRAN. HRAN is IP based and LRAN is AAL2/ATM based. TNL control plane is IP-ALCAP and Q.AAL2.
**Figure 3a** is a signalling scheme in an IP based UTRAN according to an embodiment of the present invention.
**Figure 3b** is a signalling scheme in a mixed IP/ATM UTRAN according to an embodiment of the present invention.
**Figure 4a** is a signalling scheme for a uni-directional reservation according to an embodiment of the present invention.
**Figure 4b** is a signalling scheme showing a two-pass PATH and RESV messages for a bi-directional reservation according to an embodiment of the present invention.
**Figure 5** is a table with objects sent in the PATH and RESV messages.
**Figure 6** illustrates schematically the objects LABEL_REQUEST and LABEL objects with AAL2 label range according to one embodiment of the present invention.
**Figure 7** is a flowchart of the method according to the present invention.

### Detailed description of preferred embodiments of the present invention

The present invention will now be described more fully hereinafter with reference to the accompanying drawings, in which preferred embodiments of the invention are shown. This invention may, however, be embodied in many different forms and should not be construed as limited to the embodiments set forth herein; rather these embodiments are provided so that this disclosure will be thorough and complete, and will fully convey the scope of the invention defined by the claims to those skilled in the art. In the drawings, like numbers refer to like elements.

The Transport Network Layer (TNL) signalling solution according to the present invention is adapted for implementation in a UMTS Terrestrial Radio Access Network (UTRAN) TNL. The UTRAN comprises at least one RNC connected to at least one Node B via the TNL as described above. The TNL signalling according the present invention is based on the standard IP resource reservation - traffic engineering protocol, RSVP-TE, which is the extension of RSVP to support label switched tunnels described in R. Braden et. al.: Resource ReSerVation Protocol (RSVP) -- Version 1 Functional Specification, RFC 2205, Sep. 1997; D. Awduche: Extensions to RSVP for LSP Tunnels, RFC 3209, Dec. 2001. RSVP-TE signalling is performed for each flow connection and standard RSVP-TE messages and objects are used.

One of the functionalities required by the TNL signalling is flow identification. For each connection, TNL signalling messages has to contain the flow identification information. In accordance with the current RSVP-TE messages standard SESSION object carries Node B IP address, UDP port number and protocol ID. SENDER_TEMPLATE includes RNC IP address and UDP port number. In this way SESSION arid SENDER_TEMPLATE are the objects that contain the IP-based 5-tuple flow information. That identity is in accordance with the present invention used for flow identification in the TNL signalling in a UTRAN. SESSION and SENDER_TEMPLATE information is processed by the edge nodes such as the Node B or the IWU, but not in interior nodes.

Thus, the present invention relates to a method and an arrangement for controlling the user plane of a UMTS Terrestrial Radio Access Network, UTRAN, comprising a first edge node connected via a Transport Network Layer to a second edge node, by using Transport Network Layer, TNL, signalling wherein a radio link is set up by using the Node B Application Part between the first and second edge nodes of the UTRAN, RSVP-TE based TNL signalling messages are transmitted between said first and second edge nodes for each TNL flow, and each TNL flow is identified by using RSVP-TE messages, wherein the object SESSION and SENDER_TEMPLATE comprises an IP based 5-tuple flow information, which is used as a TNL flow identity.

In accordance with a first embodiment of the present invention, the TNL signalling solution is adapted for implementation in an IP based UTRAN. One RSVP-TE tunnel is established for each connection and standard RSVP-TE objects and messages are used as mentioned above. In order to achieve bidirectional reservation, one tunnel is established for downstream and another tunnel for upstream user traffic.

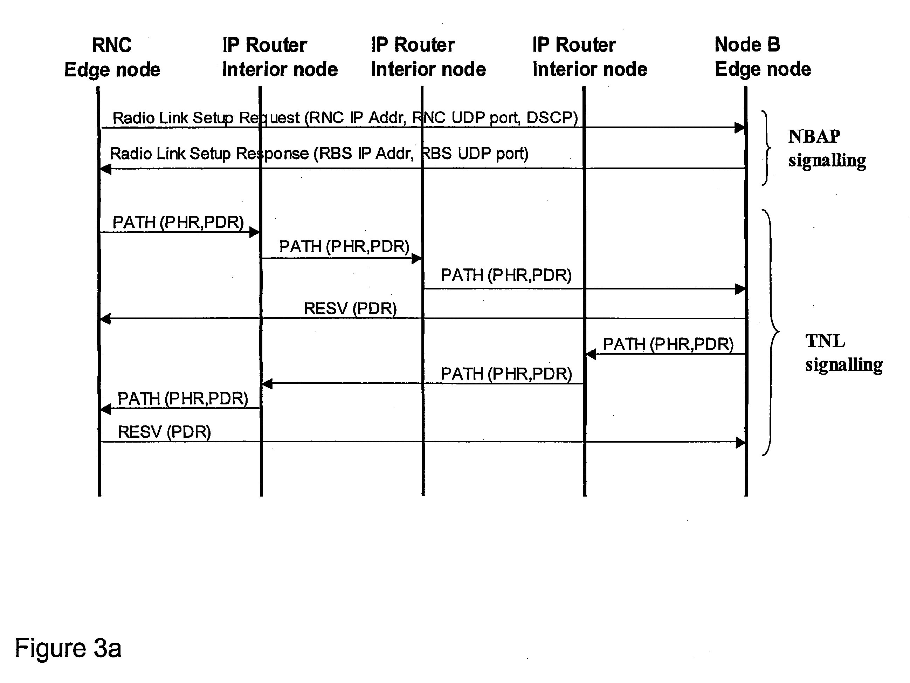

The network model between the RNC and the Node B in case of a full IP based network according to the first embodiment of the present invention is shown in **Figure 3a****.** It comprises an RNC, a Node B (also denoted base station) and interior routers. The RNC and the Node B are edge nodes using the terminology of the RMD concept.

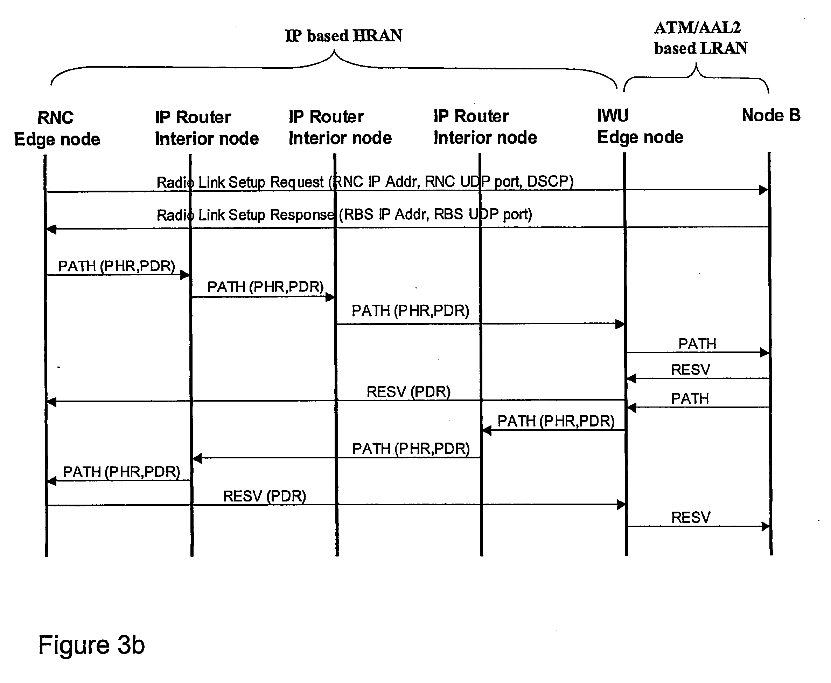

The solution according to first embodiment of the invention may also be used in the case of mixed IP/ATM network, in which an Inter-working Unit (IWU) is adapted to operate between the IP and the ATM network parts. This scenario is shown in **Figure 3b****.** In this case the IWU is the edge of the RMD domain.

Referring to **figures 3a** and **3b**, the radio link connections are set up by Node B Application Part (NBAP) signalling between the RNC and the Node B in accordance with prior art. The setup is initiated at the RNC that sends a Radio Link Setup Request. The request is answered by the Node B in a Radio Link Setup Response message. In the NBAP signalling, the IP addresses and the UDP port number are exchanged, as shown in **Figure 3a** and **3b****.** Optionally, a DiffServ Code Point (DSCP) may also be transmitted.

Bi-directional resource reservation is established by the TLN messages, the two-pass PATH message and the two-pass RESV message, as shown in the **Figures 3a** and **3b****.** Two functionalities that the TNL signalling have to provide is flow definition and resource reservation.

The flow identification is performed as described above according to the present invention. In addition PDR objects contain the flow identity as described above, which is a combination of the source and destination edge node IP addresses and the DSCP field.

The message sequences to establish a bi-directional connection are shown in **figures 3a** and **3b****.** In the RMD domain, the messages are routed by standard routing protocols both upstream and downstream. Unlike to standard RSVP and RSVP-TE concepts, per hop routing states are not stored in the routers in the RMD domain. RSVP-TE messages arranged to contain standard RSVP-TE objects and two objects i.e. PHR and PDR which are further described below, are in accordance with the first embodiment introduced in order to perform resource reservation in accordance with the "Resource Management in DiffServ" (RMD) method. The resource reservation is required in order to provide QoS. The PHR and the PDR objects are defined in the RMD concept disclosed in L. Westberg et.al.: "Resource Management in DiffServ Framework", Internet Draft, Work in Progress, 2001; L. Westberg et.al.: "Resource Management in DiffServ (RMD): A Functionality and Performance Behavior Overview", Protocols for High Speed Networks, 2002, Berlin.

The resource reservation scheme of the first embodiment of the present invention is based on the RMD framework. In RMD, only edge nodes, such as RNC and IWU as in the mixed IP and ATM/AAL2 network as shown in **figure 3b**, use complex reservation methods and maintain per flow resource reservation states. In interior nodes such as IP routers as indicated **in** **figures 3a** and **3b****,** it is suitable to use only very simple resource reservation methods, e.g. summing resource units and it is suitable to maintain only aggregated reservation states.

The RSVP-TE messages are adapted to contain, standard RSVP-TE objects and RMD specific objects: PHR and PDR objects. The RNC initiates the signalling by sending a PATH message towards Node B. The PATH message includes a PDR object and a PHR object. PHR contains simple reservation information such as bandwidth for interior nodes and for downstream direction. The PDR object contains the flow identity, as it is described above, and it may also contain resource reservation information for an upstream reservation. The PHR object is processed in each interior node passing by and the reservation is made. The PDR object, sent by the RNC, is processed only at the edge nodes, i.e. the at Node B or at the IWU.

After processing the PATH message in the Node B, the B responds with a RESV message. In the RMD domain, the RESV message is routed by standard routing protocols, while outside of the RMD domain, the RESV message is sent subsequently to the PATH message in the reverse direction as in the case of RSVP. Different routing is used inside and outside of the RMD domain. Inside of the RMD domain, standard IP routing is used such as OSPF or BGP.
Outside the RMD domain, routing is done as in case of RSVP: PATH installs transport states in routers (IP address and port number of previous hop are stored) and RESV is sent to this address. In this way RESV follows the same route as PATH in reverse direction. There is difference between the methods used inside and outside of RMD domain if the upstream and downstream IP routes are different (IP routing is not symmetric). The edge node, i.e. Node B in the full IP case shown in **figure 3a** or the IWU in the case of mixed ATM/IP as shown in **figure 3b****,** inserts a PDR object into the RESV message. This PDR object contains reservation confirmation information.

A PATH message is also sent by Node B. The edge node (Node B in full IP case or IWU in case of mixed ATM/IP) inserts a PHR and a PDR object for resource reservation in upstream direction. PHR is processed in each interior node while PDR only in the RNC. Resource reservation is done in the same way as in case of downstream direction.

After receiving PATH, RNC sends a RESV message back to the Node B. A PDR object, containing reservation confirmation information may be sent to edge node in RESV.

The reservation states in the DiffServ domain are soft states, which are refreshed periodically during time of the connection. Refreshment of the resources in the RMD domain is done by sending PATH messages as it is described in RSVP-TE and RMD framework. Not-refreshed resources are removed after the time-out period.

Tear down and fault-handling operations follow the scheme of RMD and message operation can be derived in the same way as in case of basic operation.

According to a second embodiment of the present invention, the TNL signalling comprises an extension of RSVP-TE to be used in the ATM/AAL2 domain of the UTRAN. I.e., it is possible to use one single control protocol regardless of the transport technology, i.e IP and/or ATM/AAL2. Therefore, in a network in which mixed AAL2/ATM and IP transport solutions are used, the IWU is not required in the TNL Control Plane between the ATM/AAL2 network and the IP network. However, the TNL signalling in accordance with the second embodiment requires additional objects in addition to the current RSVP-TE and also in addition to the TNL signalling in accordance with the first embodiment of the invention. These additional objects must however be excluded in the IP domain to ensure proper operation. To enable the application of AAL2 admission control functions used in one of the releases of UTRAN, the TNL signalling also comprises a possible usage of already existing objects of RSVP-TE.

The TNL signalling according to the second embodiment is in the following way:
The TNL signalling is adapted to control both ATM and AAL2 layers of AAL2 switches. So, the establishment of a new AAL2 connection may initiate the creation or modification of ATM VCs.

Moreover, the TNL signalling may also be adapted to control the AAL2 layer only. The ATM layer of AAL2 switches is configured semi-permanently by standard RSVP-TE or via the management system. This is denoted as RSVP-TE(ATM) and is performed according to prior art.

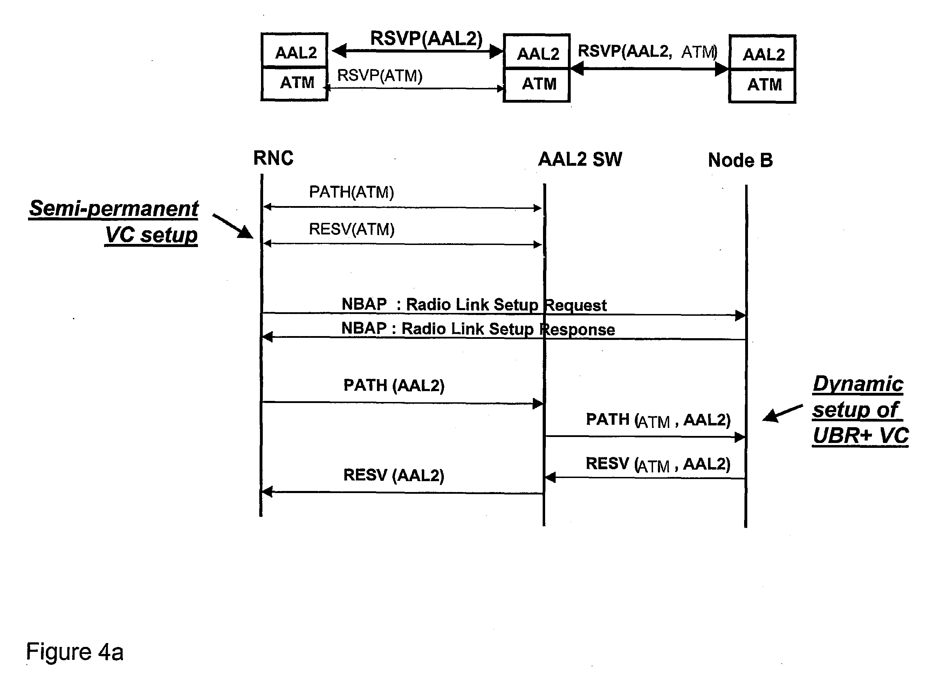

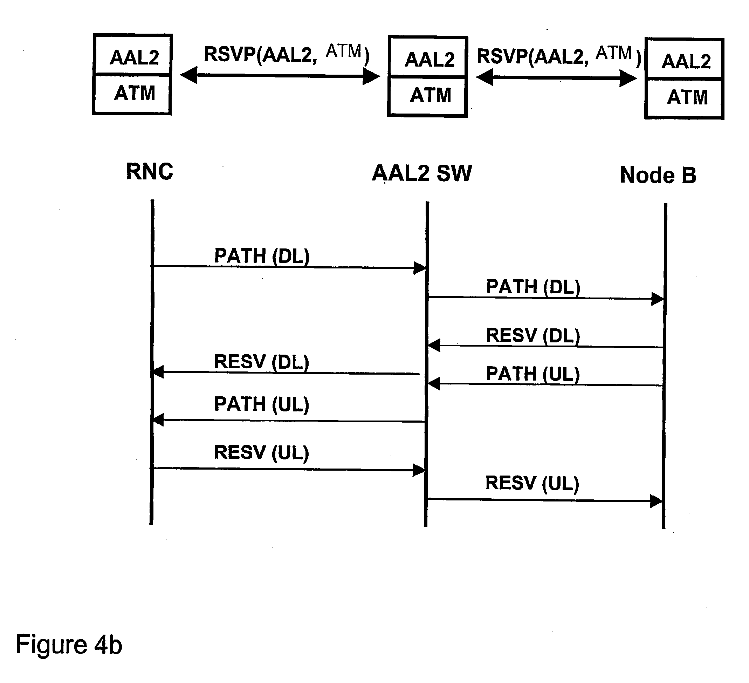

The model of the UTRAN between an RNC and a Node B and a basic unidirectional signalling operation are shown in **figure 4a****.** in the network part between the RNC and ALL2 switch, indicated in **figure 4a****,** the ATM network layer is semi-permanent while the other part (between AAL2 switch and Node B) it is set up dynamically on-demand. (Could you explain this further. I don't understand the figure with the arrows.) This means that between RNC and AAL2 switch only the AAL2 layer is controlled by RSVP-TE signalling (ATM layer is controlled by e. g. network management system), while between AAL2 SW and Node B both AAL2 and ATM are controlled by RSVP-TE. This is indicated in Figures 4a and b by PATH(AAL2) vs PATH(ATM, AAL2), etc. This is further explained in the next paragraph. In the semi-permanent part CBR, VBR or UBR⁺ VCs can be used, while in the dynamic part UBR⁺ VCs are considered.

The radio link connections are set up according to prior art by NBAP signalling between the RNC and the Node B as in the first embodiment of the invention.

RSVP-TE signalling is according to the present invention performed for each AAL2 connection. To distinguish the protocol functionality and protocol messages in different parts of the network, the protocol messages are denoted by RSVP-TE(AAL2) in the ATM/AAL2 part in which ATM VCs are set up (semi-)permanently, and RSVP-TE(ATM,AAL2) in the ATM/AAL2 part in which both ATM and AAL2 layers are set up dynamically.

Considering the RSVP-TE functions, the RNC is the sender and the Node B is a receiver in **figure 4a****.** In the standard RSVP-TE, resource reservation is performed by the receiver in the reverse direction. Since the RNC in UTRAN possesses all the flow identification and reservation information, practically all relevant information is signalled from the RNC. The Node B acts as a proxy reflecting the received information if necessary in order to comply with the current standard.

Three functions that the ATM/AAL2 TNL signalling is requited to provide are (1) flow identification (2) AAL2/ATM layer configuration and (3) QoS provisioning.

The flow identification of control messages is performed as described above in accordance with the present invention.

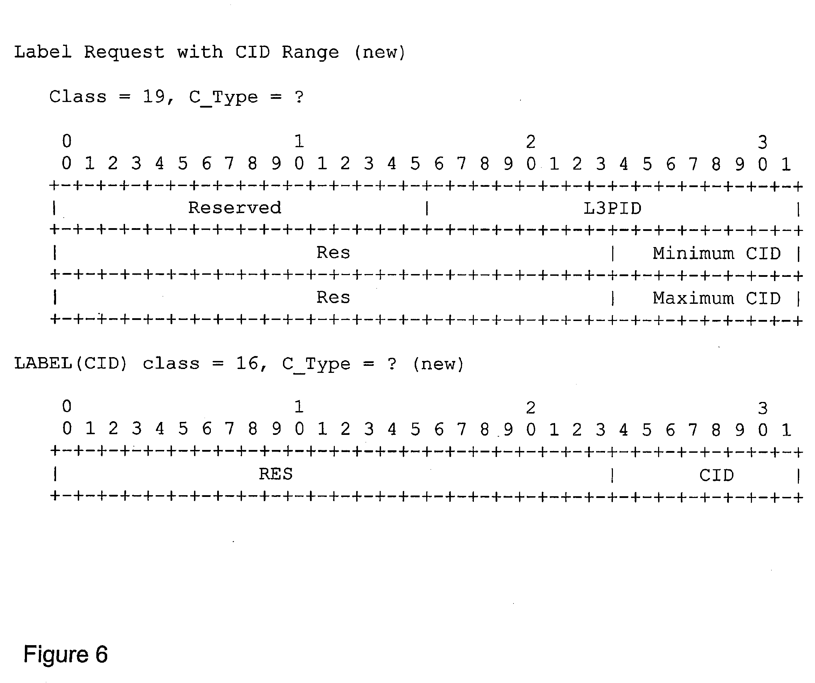

In order to configure the ATM/AAL2 network part, CID, VPI/VCI values have to be signalled between adjacent nodes along the path of the AAL2 connection. To achieve this, a LABEL_REQEST with ATM Label Range (standard RFC 3209) is sent to the next ATM/AAL2 switch, which can choose a label from this range to be used on the specific link. For AAL2 configuration, a new class type must be defined, which in accordance with the second embodiment of the present invention is denoted AAL2_LABEL_REQUEST. AAL2_LABEL_REQUEST is sent in the PATH message to the next AAL2 switch indicating the AAL2 label range (i.e. CID range), from which the next hop AAL2 switch can select a single value. The form of this defined object is disclosed in **figure 6****.**

In the RESV message, the ATM and the AAL2 label requests are answered by sending two LABEL objects in the RESV message: ATM LABEL object contains VPI and VCI while AAL2 LABEL objects contains CID of the connection. LABEL and AAL2_LABEL objects are processed by the same nodes in which LABEL_REQUEST and AAL2_LABEL_REQUEST were originated. The way the above objects are used depends on whether the ATM layer is configured dynamically or not.

If the ATM layer is configured statically then the new connection must use an already existing VC. Therefore, the AAL2 switches have to select a VPI/VCI pair that belongs to an existing VC, which has enough resources for the new AAL2 connection. If there is no VC with sufficient resources e.g. with no available CID value or with not enough free capacity then the call is blocked.

If both ATM and AAL2 are configured dynamically, then two cases are possible. If there is an already established VC with sufficient resources then it may be used i.e. the AAL2 switches select its VP/VC identifier. Otherwise a new VC should be established together with the new AAL2 connection. That is, a new VPI/VCI is selected by the AAL2 switches. Note that VCI, VPI or CID can be assigned explicitly by the sender if the range is limited to one value.

In he ATM/AAL2 network part, QoS is ensured by AAL2 CAC. One of the objects of the second embodiment is to minimize new implementation in the ATM/AAL2 nodes, e.g. to avoid the development of a new CAC algorithm. The AAL2 CAC algorithm in one release of UTRAN, AAL2 switches has the following parameters: number of sources, link capacity, packet size, Transmission Time Interval (TTI), activity factor, QoS class, delay and loss requirement, segment size and priority level. From these parameters only packet size, TTI, activity factor, QoS class and priority level is signalled by Q.AAL2 in the prior art. The other parameters are either configured (e.g. link capacity) or measured (e.g. number of sources).

Assuming that the TNL signalling according to the second embodiment has to signal the same AAL2 CAC parameters as the Q.AAL2. This can be performed by properly filling in the DSCP field and token bucket descriptors.

The token bucket descriptors are signalled in the object SENDER_TSPEC and in the object FLOW_SPEC. The object SENDER_TSPEC is sent in the PATH messages containing IntServ traffic descriptors of the user traffic. This traffic information is used in the receiver node of the flow to define the object FLOW_SPEC, which is sent back in the RESV message. The actual reservation is based on traffic parameters specified in the FLOW_SPEC object. Since multicast is not supported, FLOW_SPEC is practically identical to SENDER_TSPEC.

The DCLASS object contains DSCP of the flow. Assuming that the DSCP is exchanged in the NBAP signalling, which means that the Node B is able to put the proper value into the RESV messages. FLOW_SPEC and DCLASS are supposed to be used by AAL2 CAC for admission control decision. CAC parameters signalled in FLOW_SPEC object are packet size (bucket size) and TTI (bucket size / token rate). Priority level and QoS class is signalled in the DCLASS object. Thus, the only remaining CAC parameter that is signalled by Q.AAL2 but not mapped to RSVP-TE yet is activity factor. Activity factor cannot be obtained from standard IntServ tocken bucket parameters. This may be performed according to embodiment of the invention in three ways. Firstly, the Activity factor values are configured in the AAL2/ATM nodes and DSCP and other traffic descriptors are used for classification. Secondly, it is signalled in one of the unused field of TSPEC and FLOW_SPEC, and finally a new field or object are defined to signal the value of the Activity factor. However, the Activity factor may also be obtained by another method, which is obvious for a man skilled in the art.

An example of a successful establishment of a bi-directional connection is disclosed below. Unsuccessful Setup, Refresh, Tear Down operations are also based on standard RSVP-TE features and may be derived from the following example. When assuming asymmetric routing, which means that the route of the UpLink (UL) and the DownLink (DL) traffic may be different. This requires the two-pass PATH message flow and the two-pass RESV message flow, as it is shown in **figure 4b****.** The RESV message for the DL flow may be sent the same time as the PATH message for the UL flow. Note that this bidirectional reservation is made up from two independent uni-directional reservations. Therefore, the flow identifiers of the two directions are different and the assigned labels of the two directions on the same link may also differ.

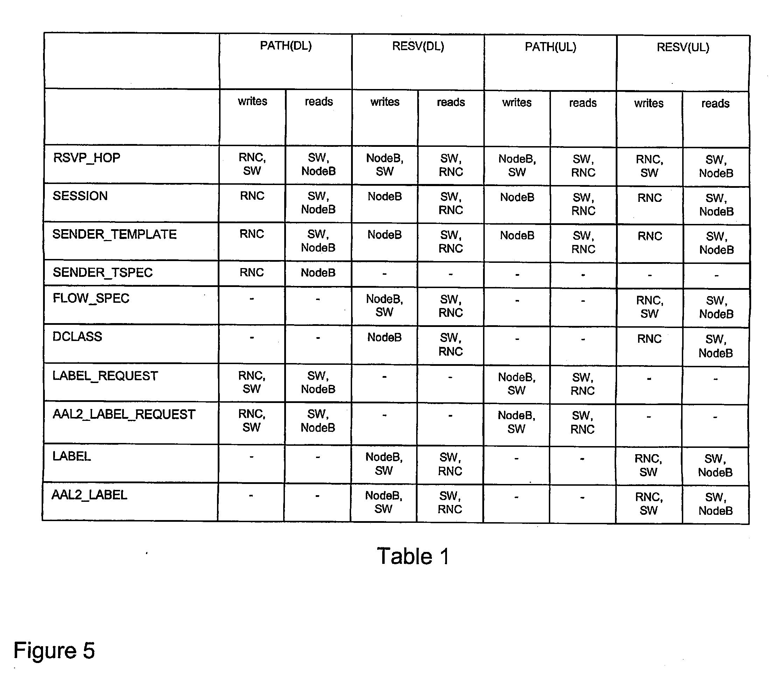

In the table in **figure 5****,** the most important objects sent in PATH and RESV messages are described. The table also indicates which nodes read and which ones write the listed objects. In the case of the UTRAN, one problem is for the Node B to fill in the objects for the uplink reservation (i.e. SENDER_TEMPLAT, SESSION, SENDER_TSPEC). Accordingly, the Node B must fill in the objects SENDER_TEMPLATE and SESSION for the PATH message that belongs to the uplink reservation. A solution is according to the second embodiment of the present invention that the IP address and the port are copied from the SENDER_TEMPLATE of PATH(DL) to the SESSION object of PATH(UL) and the IP address and port from the SESSION object of PATH(DL) are copied to SENDER_TEMPLATE of PATH(UL).

The other object that is related to uplink reservation is the SENDER_TSPEC object. According to the normal operation, the receiver assigns the content of the FLOW_SPEC object in accordance with the information received in the object SENDER_TSPEC. For uplink reservation, the RNC is arranged to fill in the FLOW_SPEC object based on local information while ignoring the SENDER_TSPEC object sent by the Node B. LABEL_REQUEST, AAL2_LABEL_REQUEST, LABEL and AAL2_LABEL objects are used in the same way as in the case of unidirectional reservations.

The objects LABEL_REQUEST and the object LABEL with AAL2 label range are defined according to the second embodiment of the present invention. Said objects are defined in a similar way as LABEL_REQUEST and LABEL objects with ATM label range described in RFC 3209 [D. Awduche: Extensions to RSVP for LSP Tunnels, RFC 3209, Dec. 2001]. The less significant 8 bits contain Channel Identification (CID) value, as shown in **Figure 6****.**

According to a third embodiment of the present invention, the proposed TNL signalling may also be used in a mixed ATM-IP network, in which HRAN is IP based and LRAN is ATM based. An Inter-working Unit (IWU) operates between the ATM and IP network parts, see **figure 2b****.** In the user plane, the IWU converts the IP packets to ATM packets, but the IWU is not needed for the control plane, which is an advantage of the present invention.

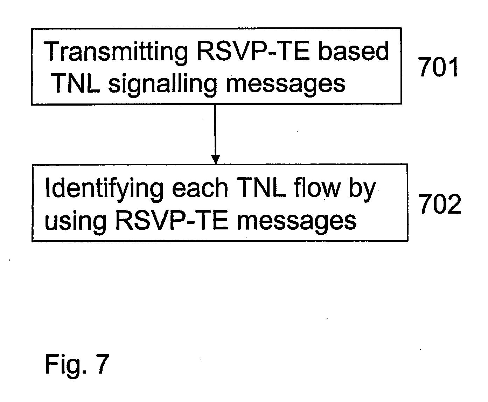

The method according to the present invention is illustrated by the flowchart in **figure 7****.** Thus, the method for controlling the user plane of a UMTS Terrestrial Radio Access Network, UTRAN, comprising a first edge node connected via a Transport Network Layer to a second edge node, by using Transport Network Layer, TNL, signalling, comprises the steps of:
701. Transmitting RSVP-TE based TNL signalling messages between said first and second edge nodes for each TNL flow,
702. Identifying each TNL flow by using RSVP-TE messages, wherein the object SESSION and SENDER_TEMPLATE comprises an IP based 5-tuple flow information, which is adapted to be used as a TNL flow identity.

Furthermore, the arrangement according to the present invention comprises means for performing the method of the present invention and the preferred embodiments. Said means may be implemented by software and/or hardware means in a RNC, Node B and/or in an IWU.

In the drawings and specification, there have been disclosed typical preferred embodiments of the invention and, although specific terms are employed, there are used in a generic and descriptive sense only and not for purposes of limitation, the scope of the invention being set forth in the following claims.

## Claims

1. A method for controlling the user plane of a UMTS Terrestrial Radio Access Network, UTRAN, (102) comprising a first edge node (105) connected via a Transport Network Layer to a second edge node (104), by using Transport Network Layer, TNL, signalling, the method comprises the step of:
- setting up a radio link by using the Node B Application Part between the first (105) and second (104) edge nodes of the UTRAN, the method is **characterised in that** it comprises the further steps of:
- transmitting (701) IP resource reservation - traffic engineering protocol, RSVP-TE, based TNL signalling messages, containing SESSION object carrying Node B IP address, UDP port number and protocol ID and SENDER_TEMPLATE including RNC IP address and UDP port number, between said first and second edge nodes for each TNL flow,
- identifying (702) each TNL flow on the basis of said RSVP-TE based TNL signalling messages, the IP-based 5-tuple flow information contained in the SESSION and SENDER_TEMPLATE objects defining a TNL flow identity.

2. The method according to claim 1,wherein the method comprises the further step of:
- establishing one RSVP-TE tunnel for each connection direction between the first edge node and the second edge node.

3. The method according to any of claims 1-2, wherein the method comprises the further step of:
- initiating the TNL signalling by sending a PATH message comprising at least reservation information including bandwidth for interior nodes and the TNL flow identity.

4. The method according to claim 3, wherein the method comprises the further step of:
- processing the reservation information in each interior node between the edge nodes.

5. The method according to claim 3, wherein the method comprises the further step of:
- processing the TNL flow identity in the edge nodes.

6. The method according to claim 3, wherein the method comprises the further step of:
- responding to said PATH message by transmitting a RESV message comprising standard RSVP-TE objects and PHR and PDR objects in the reverse direction.

7. The method according to claim 3, wherein the method comprises the further step of:
- responding to said PATH message by transmitting a RESV message comprising standard RSVP-TE, PHR, PDR objects or AAL2_LABEL_REQUEST or AAL2 LABEL objects in the reverse direction, and
- inserting a resource reservation confirmation information in said RESV message.

8. The method according to any of claims 1-6, wherein the first edge node is a Radio Network Controller in the UTRAN and the second edge node is a Node B in the UTRAN.

9. The method according to any of claims 1-6, wherein the second edge node is a Radio Network Controller in the UTRAN and the first edge node is a Node B in UTRAN.

10. The method according to any of claims 1-5 and 7, wherein the first edge node is a Radio Network Controller in the UTRAN and the second edge node is an InterWorking Unit between an IP based part of the UTRAN and an AAL2/ATM part of the UTRAN.

11. The method according to any of claims 1-5 and 7, wherein the second edge node is a Radio Network Controller in the UTRAN and the first edge node is an InterWorking Unit between an IP based part of the UTRAN and an AAL2/ATM part of the UTRAN.

12. The method according to claim 1, wherein the method comprises the further step of:
- configuring an AAL2/ATM UTRAN part by sending a PATH message comprising a Channel Identification Value, CID, VPI/VCI values to adjacent nodes along the path of the connection.

13. The method according to claim 12, wherein the object LABEL_REQUEST with ATM Label Range is adapted to carry VPI/VCI values and AAL2_LABEL_REQUEST is adapted to carry CID value.

14. The method according to any of claims 12-13, wherein the method comprises the further step of:
- responding to said PATH message and said AAL2 label request by transmitting a RESV message comprising at least an ATM LABEL object comprising VPI and VCI and an AAL2 LABEL object comprising CID of the connection.

15. The method according to claim 14, wherein the method comprises the further step of:
- processing the LABEL and AAL2_LABEL objects by the same nodes in which LABEL_REQUEST and AAL2_LABEL_REQUEST were originated.

16. The method according to any of claims 12-15, wherein the method comprises the further step of:
- ensuring the Quality of Service (QoS) in the ATM/AAL2 network part, by using AAL2 CAC.

17. The method according to claim 13, wherein the less significant eight bits of the objects LABEL_REQUEST and the object LABEL with AAL2 label range comprise a CID value.

18. The method according to any of claims 12-17, when an Inter-working Unit (IWU) operates between the ATM network part and the IP network part, the method comprises the further step of:
- translating the Q.AAL2 and the IP-ALCAP messages to said RSVP-TE based TNL signalling messages.

19. An arrangement for controlling the user plane of a UMTS Terrestrial Radio Access Network, UTRAN, (102) comprising a first edge node (105) connected via a Transport Network Layer to a second edge node (104), by using Transport Network Layer, TNL, signalling, the arrangement comprises means for setting up a radio link using the Node B Application Part between the first (105) and second (104) edge nodes of the UTRAN (102), the arrangement is **characterised in that** the arrangement comprises means for transmitting (701) IP resource reservation - traffic engineering protocol, RSVP-TE, based TNL signalling messages, containing SESSION object carrying Node B IP address, UDP port number and protocol ID and SENDER_TEMPLATE including RNC IP address and UDP port number, between said first and second edge nodes for each TNL flow,
means for identifying (702) each TNL flow on the basis of said RSVP-TE based TNL signalling messages, the IP-based 5-tuple flow information contained in the SESSION and SENDER_TEMPLATE objects defining a TNL flow identity.

20. The arrangement according to claim 19,wherein the arrangement comprises means for establishing one RSVP-TE tunnel for each connection direction between the first edge node and the second edge node.

21. The arrangement according to any of claims 19-20, wherein the arrangement comprises means for initiating the TNL signalling by sending a PATH message comprising at least reservation information including bandwidth for interior nodes and the TNL flow identity.

22. The arrangement according to claim 21, wherein the arrangement comprises means for processing the reservation information in each interior node between the edge nodes.

23. The arrangement according to claim 21, wherein the arrangement comprises means for processing the TNL flow identity in the edge nodes.

24. The arrangement according to claim 21, wherein the arrangement comprises means for transmitting a RESV message comprising standard RSVP-TE objects and PHR and PDR objects in the reverse direction in response to said PATH message.

25. The arrangement according to claim 21, wherein the arrangement comprises means for transmitting a RESV message comprising standard RSVP-TE, PHR, PDR objects or AAL2_LABEL_REQUEST or AAL2 LABEL objects in the reverse direction in response to said PATH message, and means for inserting a resource reservation confirmation information in said RESV message.

26. The arrangement according to any of claims 19-24, wherein the first edge node is a Radio Network Controller in the UTRAN and the second edge node is a Node B in the UTRAN.

27. The arrangement according to any of claims 19-24, wherein the second edge node is a Radio Network Controller in the UTRAN and the first edge node is a Node B in UTRAN.

28. The arrangement according to any of claims 19-23 and 25, wherein the first edge node is a Radio Network Controller in the UTRAN and the second edge node is an Inter Working Unit between an IP based part of the UTRAN and an AAL2/ATM part of the UTRAN.

29. The arrangement according to any of claims 19-23 and 25, wherein the second edge node is a Radio Network Controller in the UTRAN and the first edge node is an Inter Working Unit between an IP based part of the UTRAN and an AAL2 /ATM part of the UTRAN.

30. The arrangement according to claim 19, wherein the arrangement comprises means for sending a PATH message comprising a Channel Identification CID, VPI/VCI values to adjacent nodes along the path of the connection to configure an AAL2/ATM UTRAN part.

31. The arrangement according to claim 30, wherein the object LABEL_REQUEST with ATM Label Range is adapted to carry VPI/VCI values and AAL2_LABEL_REQUEST is adapted to carry CID value.

32. The arrangement according to any of claims 30-31, wherein the arrangement comprises means for transmitting a RESV message comprising at least an ATM LABEL object comprising VPI and VCI and an AAL2 LABEL object comprising CID of the connection in response to said PATH message and said AAL2 label request.

33. The arrangement according to claim 32, wherein the arrangement comprises means, in the same nodes in which LABEL_REQUEST and AAL2_LABEL_REQUEST were originated, for processing the LABEL and AAL2_LABEL objects.

34. The arrangement according to any of claims 30-33, wherein the arrangement comprises means for ensuring the Quality of Service (QoS) in the ATM/AAL2 network part, by using AAL2 CAC.

35. The arrangement according to claim 31, wherein the less significant eight bits of the objects LABEL_REQUEST and the object LABEL with AAL2 label range comprise a CID value.

## Patentansprüche

1. Verfahren zum Steuern der Teilnehmerebene eines terrestrischen UMTS-Funkzugangsnetzes, UTRAN, (102), einen ersten Randknoten (105) umfassend, der über eine Transportnetzschicht an einen zweiten Randknoten (104) angeschlossen ist, durch Verwendung von TNL(Transportnetzschicht)-Zeichengabe, wobei das Verfahren folgenden Schritt umfasst:
- Aufbauen einer Funkverbindung durch Verwendung des Knoten-B-Anwendungsteils zwischen den ersten (105) und zweiten (104) Randknoten des UTRAN, wobei das Verfahren **dadurch gekennzeichnet ist, dass** es folgende weitere Schritte umfasst:
- Übertragen (701) zwischen den ersten und zweiten Randknoten für jeden TNL-Fluss von RSVP-TE(IP-Ressourcenreservierung-Traffic-Engineering-Protokoll)-basierten TNL-Zeichengabenachrichten, die das SESSION-Objekt enthalten, das Knoten B IP-Adresse, UDP-Portnummer und Protokoll-ID trägt, und das SENDER_TEMPLATE enthalten, das RNC-IP-Adresse und UDP-Portnummer einschließt,
- Identifizieren (702) eines jeden TNL-Flusses auf der Basis der RSVP-TEbasierten TNL-Zeichengabenachrichten, wobei die in den SESSION- und SENDER_TEMPLATE-Objekten enthaltene IP-basierte 5-Tupel-Flussinformation eine TNL-Flusskennung definiert.

2. Verfahren nach Anspruch 1, worin das Verfahren folgenden weiteren Schritt umfasst:
- Aufbau eines RSVP-TE-Tunnels für jede Verbindungsrichtung zwischen dem ersten Randknoten und dem zweiten Randknoten.

3. Verfahren nach einem der Ansprüche 1 bis 2, worin das Verfahren folgenden weiteren Schritt umfasst:
- Initiieren der TNL-Zeichengabe durch Senden einer PATH-Nachricht, mindestens Reservierungsinformation umfassend, die Bandbreite für Innenknoten und die TNL-Flusskennung einschließt.

4. Verfahren nach Anspruch 3, worin das Verfahren folgenden weiteren Schritt umfasst:
- Verarbeiten der Reservierungsinformation in jedem Innenknoten zwischen den Randknoten.

5. Verfahren nach Anspruch 3, worin das Verfahren folgenden weiteren Schritt umfasst:
- Verarbeiten der TNL-Flusskennung in den Randknoten.

6. Verfahren nach Anspruch 3, worin das Verfahren folgenden weiteren Schritt umfasst:
- Reagieren auf die PATH-Nachricht durch Übertragen einer standardmäßige RSVP-TE-Objekte und PHR- und PDR-Objekte umfassenden RESV-Nachricht in der umgekehrten Richtung.

7. Verfahren nach Anspruch 3, worin das Verfahren folgenden weiteren Schritt umfasst:
- Reagieren auf die PATH-Nachricht durch Übertragen einer standardmäßige RSVP-TE-, PHR-, PDR-Objekte oder AAL2_LABEL_REQUEST- oder AAL2_LABEL-Objekte umfassenden RESV-Nachricht in der umgekehrten Richtung, und
- Einfügen einer Ressourcenreservierungs-Bestätigungsinformation in die RESV-Nachricht.

8. Verfahren nach einem der Ansprüche 1 bis 6, worin der erste Randknoten ein Funknetzcontroller im UTRAN und der zweite Randknoten ein Knoten B im UTRAN ist.

9. Verfahren nach einem der Ansprüche 1 bis 6, worin der zweite Randknoten ein Funknetzcontroller im UTRAN und der erste Randknoten ein Knoten B im UTRAN ist.

10. Verfahren nach einem der Ansprüche 1 bis 5 und 7, worin der erste Randknoten ein Funknetzcontroller im UTRAN und der zweite Randknoten ein Netzanpassungsgerät zwischen einem IP-basierten Teil des UTRAN und einem AAL2/ATM-Teil des UTRAN ist.

11. Verfahren nach einem der Ansprüche 1 bis 5 und 7, worin der zweite Randknoten ein Funknetzcontroller im UTRAN und der erste Randknoten ein Netzanpassungsgerät zwischen einem IP-basierten Teil des UTRAN und einem AAL2/ATM-Teil des UTRAN ist.

12. Verfahren nach Anspruch 1, worin das Verfahren folgenden weiteren Schritt umfasst:
- Konfigurieren eines AAL2/ATM-UTRAN-Teils durch Senden einer Kanalkennwert, CID-, VPI/VCI-Werte umfassenden PATH-Nachricht an benachbarte Knoten entlang dem Pfad der Verbindung.

13. Verfahren nach Anspruch 12, worin das Objekt LABEL_REQUEST mit ATM-Label-Bereich dazu angepasst ist, VPI/VCI-Werte zu tragen, und AAL2_LABEL_REQUEST dazu angepasst ist, CID-Werte zu tragen.

14. Verfahren nach einem der Ansprüche 12 bis 13, worin das Verfahren folgenden weiteren Schritt umfasst:
- Reagieren auf die PATH-Nachricht und die AAL2-Label-Anforderung durch Übertragen einer RESV-Nachricht, die mindestens ein ATM-LABEL-Objekt umfasst, das VPI und VCI umfasst, und ein AAL2-LABEL-Objekt, das die CID der Verbindung umfasst.

15. Verfahren nach Anspruch 14, worin das Verfahren folgenden weiteren Schritt umfasst:
- Verarbeiten der LABEL- und AAL2_LABEL-Objekte durch dieselben Knoten, in denen LABEL_REQUEST und AAL2_LABEL_REQUEST erzeugt wurden.

16. Verfahren nach einem der Ansprüche 12 bis 15, worin das Verfahren folgenden weiteren Schritt umfasst:
- Sicherstellen der Dienstgüte (QoS) im ATM/AAL2-Netzteil durch Verwendung von AAL2 CAC.

17. Verfahren nach Anspruch 13, worin die weniger signifikanten acht Bits der Objekte LABEL_REQUEST und des Objekts LABEL mit AAL2-Label-Bereich einen CID-Wert umfassen.

18. Verfahren nach einem der Ansprüche 12 bis 17, wenn ein Netzanpassungsgerät (IWU) zwischen dem ATM-Netzteil und dem IP-Netzteil arbeitet, wobei das Verfahren folgenden weiteren Schritt umfasst:
- Übersetzen der Q.AAL2- und IP-ALCAP-Nachrichten in RSVP-TE-basierte TNL-Zeichengabenachrichten.

19. Anordnung zum Steuern der Teilnehmerebene eines terrestrischen UMTS-Funkzugangsnetzes, UTRAN, (102), einen ersten Randknoten (105) umfassend, der über eine Transportnetzschicht an einen zweiten Randknoten (104) angeschlossen ist, durch Verwendung von TNL(Transportnetzschicht)-Zeichengabe, wobei die Anordnung Mittel umfasst, um eine Funkverbindung unter Verwendung des Knoten-B-Anwendungsteils zwischen den ersten (105) und zweiten (104) Randknoten des UTRAN (102) aufzubauen, wobei die Anordnung **dadurch gekennzeichnet ist, dass** die Anordnung Mittel umfasst zum Übertragen (701) zwischen den ersten und zweiten Randknoten für jeden TNL-Fluss von RSVP-TE(IP-Ressourcenreservierung - Traffic-Engineering-Protokoll)-basierten TNL-Zeichengabenachrichten, die das SESSION-Objekt enthalten, das Knoten B IP-Adresse, UDP-Portnummer und Protokoll-ID trägt, und das SENDER_TEMPLATE enthalten, das RNC-IP-Adresse und UDP-Portnummer einschließt,
Mittel zum Identifizieren (702) eines jeden TNL-Flusses auf der Basis der RSVP-TE-basierten TNL-Zeichengabenachrichten, wobei die in den SESSION- und SENDER_TEMPLATE-Objekten enthaltene IP-basierte 5-Tupel-Flussinformation eine TNL-Flusskennung definiert.

20. Anordnung nach Anspruch 19, worin die Anordnung Mittel umfasst, um einen RSVP-TE-Tunnel für jede Verbindungsrichtung zwischen dem ersten Randknoten und dem zweiten Randknoten aufzubauen.

21. Anordnung nach einem der Ansprüche 19 bis 20, worin die Anordnung Mittel umfasst, um die TNL-Zeichengabe durch Senden einer PATH-Nachricht zu initiieren, die mindestens Reservierungsinformation umfasst, die Bandbreite für Innenknoten und die TNL-Flusskennung enthält.

22. Anordnung nach Anspruch 21, worin die Anordnung Mittel umfasst, um die Reservierungsinformation in jedem Innenknoten zwischen den Randknoten zu verarbeiten.

23. Anordnung nach Anspruch 21, worin die Anordnung Mittel umfasst, um die TNL-Flusskennung in den Randknoten zu verarbeiten.

24. Anordnung nach Anspruch 21, worin die Anordnung Mittel umfasst, um eine standardmäßige RSVP-TE-Objekte und PHR- und PDR-Objekte umfassende RESV-Nachricht in der umgekehrten Richtung als Reaktion auf die PATH-Nachricht zu übertragen.

25. Anordnung nach Anspruch 21, worin die Anordnung Mittel umfasst, um eine standardmäßige RSVP-TE-, PHR-, PDR-Objekte oder AAL2_LABEL_REQUEST- oder AAL2_LABEL-Objekte umfassende RESV-Nachricht in der umgekehrten Richtung als Antwort auf die PATH-Nachricht zu übertragen, und Mittel, um eine Ressourcenreservierungs-Bestätigungsinformation in die RESV-Nachricht einzufügen.

26. Anordnung nach einem der Ansprüche 19 bis 24, worin der erste Randknoten ein Funknetzcontroller im UTRAN und der zweite Randknoten ein Knoten B im UTRAN ist.

27. Anordnung nach einem der Ansprüche 19 bis 24, worin der zweite Randknoten ein Funknetzcontroller im UTRAN und der erste Randknoten ein Knoten B im UTRAN ist.

28. Anordnung nach einem der Ansprüche 19 bis 23 und 25, worin der erste Randknoten ein Funknetzcontroller im UTRAN und der zweite Randknoten ein Netzanpassungsgerät zwischen einem IP-basierten Teil des UTRAN und einem AAL2/ATM-Teil des UTRAN ist.

29. Anordnung nach einem der Ansprüche 19 bis 23 und 25, worin der zweite Randknoten ein Funknetzcontroller im UTRAN und der erste Randknoten ein Netzanpassungsgerät zwischen einem IP-basierten Teil des UTRAN und einem AAL2/ATM-Teil des UTRAN ist.

30. Anordnung nach Anspruch 19, worin die Anordnung Mittel umfasst zum Senden einer Kanalkennungs-CID-, VPI/VCI-Werte umfassenden PATH-Nachricht an benachbarte Knoten entlang dem Verbindungspfad, um einen AAL2/ATM-UTRAN-Teil zu konfigurieren.

31. Anordnung nach Anspruch 30, worin das Objekt LABEL_REQUEST mit ATM-Label-Bereich dazu angepasst ist, VPI/VCI-Werte zu tragen und AAL2_LABEL_REQUEST dazu angepasst ist, den CID-Wert zu tragen.

32. Anordnung nach einem der Ansprüche 30 bis 31, worin die Anordnung Mittel umfasst, um eine RESV-Nachricht zu übertragen, die mindestens ein ATM-LABEL-Objekt umfasst, das VPI und VCI und ein AAL2-LABEL-Objekt umfasst, das die CID der Verbindung umfasst, als Reaktion auf die PATH-Nachricht und die AAL2-Label-Anforderung.

33. Anordnung nach Anspruch 32, worin die Anordnung in denselben Knoten, in denen LABEL_REQUEST und AAL2_LABEL _REQUEST erzeugt wurden, Mittel zum Verarbeiten der LABEL- und AAL2_LABEL-Objekte umfasst.

34. Anordnung nach einem der Ansprüche 30 bis 33, worin die Anordnung Mittel zum Sicherstellen der Dienstgüte (QoS) im ATM/AAL2-Netzteil durch Verwendung von AAL2 CAC umfasst.

35. Anordnung nach Anspruch 31, worin die weniger signifikanten acht Bits der Objekte LABEL_REQUEST und des Objekts LABEL mit AAL2-Label-Bereich einen CID-Wert umfassen.

## Revendications

1. Procédé destiné à commander le plan utilisateur d'un réseau d'accès radio terrestre, UMTS, ou réseau UTRAN, (102) comportant un premier noeud de bordure (105) connecté via une couche réseau de transport à un second noeud de bordure (104), en faisant appel à une signalisation de couche réseau de transport, TNL, le procédé comportant l'étape ci-dessous consistant à :
- établir une liaison radio en faisant appel à la partie application du noeud B entre les premier (105) et second (104) noeuds de bordure du réseau UTRAN, le procédé étant **caractérisé en ce qu'**il comporte en outre les étapes ci-dessous consistant à :
- transmettre (701) des messages de signalisation de couche TNL à base de protocole de réservation de ressources IP - ingénierie de trafic, RSVP-TE, contenant un objet SESSION transportant une adresse IP de noeud B, un numéro de port UDP et un identifiant (ID) de protocole et un objet de modèle d'expéditeur SENDER_TEMPLATE incluant une adresse IP de contrôleur RNC et un numéro de port UDP, entre lesdits premier et second noeuds de bordure pour chaque flux de couche TNL ;
- identifier (702) chaque flux de couche TNL sur la base desdits messages de signalisation de couche TNL à base de protocole RSVP-TE, les informations de flux de quintuplet à base de protocole IP contenues dans les objets SESSION et SENDER_TEMPLATE définissant une identité de flux de couche TNL.

2. Procédé selon la revendication 1, dans lequel le procédé comporte en outre l'étape ci-après consistant à :
- établir un tunnel de protocole RSVP-TE pour chaque direction de connexion entre le premier noeud de bordure et le second noeud de bordure.

3. Procédé selon l'une quelconque des revendications 1 à 2, dans lequel le procédé comporte en outre l'étape ci-après consistant à :
- initier la signalisation de couche TNL en envoyant un message de chemin PATH comportant au moins des informations de réservation incluant la bande passante pour les noeuds internes et l'identité de flux de couche TNL.

4. Procédé selon la revendication 3, dans lequel le procédé comporte en outre l'étape ci-après consistant à :
- traiter les informations de réservation dans chaque noeud interne entre les noeuds de bordure.

5. Procédé selon la revendication 3, dans lequel le procédé comporte en outre l'étape ci-après consistant à :
- traiter l'identité de flux de couche TNL dans les noeuds de bordure.

6. Procédé selon la revendication 3, dans lequel le procédé comporte en outre l'étape ci-après consistant à :
- répondre audit message de chemin PATH en transmettant un message de réservation RESV comportant des objets de protocole RSVP-TE standard et des objets PHR et PDR dans la direction inverse.

7. Procédé selon la revendication 3, dans lequel le procédé comporte en outre l'étape ci-après consistant à :
- répondre audit message de chemin PATH en transmettant un message de réservation RESV comportant des objets de protocole RSVP-TE standard, PHR et PDR ou des objets AAL2_LABEL_REQUEST ou AAL2 LABEL dans la direction inverse ; et
- introduire des informations de confirmation de réservation de ressources dans ledit message de réservation RESV.

8. Procédé selon l'une quelconque des revendications 1 à 6, dans lequel le premier noeud de bordure est un contrôleur de réseau radio dans le réseau UTRAN et le second noeud de bordure est un noeud B dans le réseau UTRAN.

9. Procédé selon l'une quelconque des revendications 1 à 6, dans lequel le second noeud de bordure est un contrôleur de réseau radio dans le réseau UTRAN et le premier noeud de bordure est un noeud B dans le réseau UTRAN.

10. Procédé selon l'une quelconque des revendications 1 à 5 et 7, dans lequel le premier noeud de bordure est un contrôleur de réseau radio dans le réseau UTRAN et le second noeud de bordure est une unité d'interfonctionnement entre une partie à base de protocole IP du réseau UTRAN et une partie de couche AAL2/ATM du réseau UTRAN.

11. Procédé selon l'une quelconque des revendications 1 à 5 et 7, dans lequel le second noeud de bordure est un contrôleur de réseau radio dans le réseau UTRAN et le premier noeud de bordure est une unité d'interfonctionnement entre une partie à base de protocole IP du réseau UTRAN et une partie de couche AAL2/ATM du réseau UTRAN.

12. Procédé selon la revendication 1, dans lequel le procédé comporte en outre l'étape ci-après consistant à :
- configurer une partie de réseau UTRAN AAL2/ATM en envoyant un message de chemin PATH comportant une valeur d'identification de canal, CID et des valeurs VPI/VCI à des noeuds adjacents le long du chemin de la connexion.

13. Procédé selon la revendication 12, dans lequel l'objet LABEL_REQUEST avec étendue d'étiquettes de couche ATM est apte à transporter des valeurs VPI/VCI et l'objet AAL2_LABEL_REQUEST est apte à transporter une valeur CID.

14. Procédé selon l'une quelconque des revendications 12 à 13, dans lequel le procédé comporte en outre l'étape ci-après consistant à :
- répondre audit message de chemin PATH et à ladite demande d'étiquettes de couche AAL2 en transmettant un message de réservation RESV comportant au moins un objet ATM LABEL comportant les valeurs VPI et VCI et un objet AAL2 LABEL comportant la valeur CID de la connexion.

15. Procédé selon la revendication 14, dans lequel le procédé comporte en outre l'étape ci-après consistant à :
- traiter les objets LABEL et AAL2_LABEL en faisant appel aux mêmes noeuds que ceux d'où proviennent LABEL_REQUEST et AAL2_LABEL_REQUEST.

16. Procédé selon l'une quelconque des revendications 12 à 15, dans lequel le procédé comporte en outre l'étape ci-après consistant à :
- garantir la qualité de service (QoS) dans la partie de réseau ATM/AAL2 en faisant appel à AAL2 CAC.

17. Procédé selon la revendication 13, dans lequel les huit bits de poids faible des objets LABEL_REQUEST et l'objet LABEL avec étendue d'étiquette AAL2 comportent une valeur CID.

18. Procédé selon l'une quelconque des revendications 12 à 17, dans lequel, lorsqu'une unité d'interfonctionnement (IWU) opère entre la partie de réseau ATM et la partie de réseau IP, le procédé comporte en outre l'étape ci-après consistant à :
- traduire les messages Q.AAL2 et IP-ALCAP en lesdits messages de signalisation de couche TNL à base de protocole RSVP-TE.

19. Agencement destiné à commander le plan utilisateur d'un réseau d'accès radio terrestre UMTS, ou réseau UTRAN, (102) comportant un premier noeud de bordure (105) connecté via une couche réseau de transport à un second noeud de bordure (104), en faisant appel à une signalisation de couche réseau de transport, TNL, l'agencement comportant un moyen permettant d'établir une liaison radio en utilisant la partie application du noeud B entre les premier (105) et second (104) noeuds de bordure du réseau UTRAN (102), l'agencement étant **caractérisé en ce qu'**il comporte un moyen permettant de transmettre (701) des messages de signalisation de couche TNL à base de protocole de réservation de ressources IP - ingénierie de trafic, RSVP-TE, contenant un objet SESSION transportant une adresse IP de noeud B, un numéro de port UDP et un identifiant (ID) de protocole et un objet de modèle d'expéditeur SENDER_TEMPLATE incluant une adresse IP de contrôleur RNC et un numéro de port UDP, entre lesdits premier et second noeuds de bordure pour chaque flux de couche TNL ;
un moyen permettant d'identifier (702) chaque flux de couche TNL sur la base desdits messages de signalisation de couche TNL à base de protocole RSVP-TE, les informations de flux de quintuplet à base de protocole IP contenues dans les objets SESSION et SENDER_TEMPLATE définissant une identité de flux de couche TNL.

20. Agencement selon la revendication 19, dans lequel l'agencement comporte un moyen permettant d'établir un tunnel de protocole RSVP-TE pour chaque direction de connexion entre le premier noeud de bordure et le second noeud de bordure.

21. Agencement selon l'une quelconque des revendications 19 à 20, dans lequel l'agencement comporte un moyen permettant d'initier la signalisation de couche TNL en envoyant un message de chemin PATH comportant au moins des informations de réservation incluant la bande passante pour les noeuds internes et l'identité de flux de couche TNL.

22. Agencement selon la revendication 21, dans lequel l'agencement comporte un moyen permettant de traiter les informations de réservation dans chaque noeud interne entre les noeuds de bordure.

23. Agencement selon la revendication 21, dans lequel l'agencement comporte un moyen permettant de traiter l'identité de flux de couche TNL dans les noeuds de bordure.

24. Agencement selon la revendication 21, dans lequel l'agencement comporte un moyen permettant de transmettre un message de réservation RESV comportant des objets de protocole RSVP-TE standard et des objets PHR et PDR dans la direction inverse en réponse audit message de chemin PATH.

25. Agencement selon la revendication 21, dans lequel l'agencement comporte un moyen permettant de transmettre un message de réservation RESV comportant des objets de protocole RSVP-TE standard, PHR et PDR ou des objets AAL2_LABEL_REQUEST ou AAL2 LABEL dans la direction inverse en réponse audit message de chemin PATH, et un moyen permettant d'introduire des informations de confirmation de réservation de ressources dans ledit message de réservation RESV.

26. Agencement selon l'une quelconque des revendications 19 à 24, dans lequel le premier noeud de bordure est un contrôleur de réseau radio dans le réseau UTRAN et le second noeud de bordure est un noeud B dans le réseau UTRAN.

27. Agencement selon l'une quelconque des revendications 19 à 24, dans lequel le second noeud de bordure est un contrôleur de réseau radio dans le réseau UTRAN et le premier noeud de bordure est un noeud B dans le réseau UTRAN.

28. Agencement selon l'une quelconque des revendications 19 à 23 et 25, dans lequel le premier noeud de bordure est un contrôleur de réseau radio dans le réseau UTRAN et le second noeud de bordure est une unité d'interfonctionnement entre une partie à base de protocole IP du réseau UTRAN et une partie de couche AAL2/ATM du réseau UTRAN.

29. Agencement selon l'une quelconque des revendications 19 à 23 et 25, dans lequel le second noeud de bordure est un contrôleur de réseau radio dans le réseau UTRAN et le premier noeud de bordure est une unité d'interfonctionnement entre une partie à base de protocole IP du réseau UTRAN et une partie de couche AAL2/ATM du réseau UTRAN.

30. Agencement selon la revendication 19, dans lequel l'agencement comporte un moyen permettant de transmettre un message de chemin PATH comportant une valeur d'identification de canal, CID, et des valeurs VPI/VCI à des noeuds adjacents le long du chemin de la connexion en vue de configurer une partie de réseau UTRAN AAL2/ATM.

31. Agencement selon la revendication 30, dans lequel l'objet LABEL_REQUEST avec étendue d'étiquettes de couche ATM est apte à transporter des valeurs VPI/VCI et l'objet AAL2_LABEL_REQUEST est apte à transporter une valeur CID.

32. Agencement selon l'une quelconque des revendications 30 à 31, dans lequel l'agencement comporte un moyen permettant de transmettre un message de réservation RESV comportant au moins un objet ATM LABEL incluant les valeurs VPI et VCI et un objet AAL2 LABEL comportant la valeur CID de la connexion, en réponse audit message de chemin PATH et à ladite demande d'étiquettes de couche AAL2.

33. Agencement selon la revendication 32, dans lequel l'agencement comporte un moyen, dans les mêmes noeuds que ceux d'où proviennent LABEL_REQUEST et AAL2_LABEL_REQUEST, pour traiter les objets LABEL et AAL2_LABEL.

34. Agencement selon l'une quelconque des revendications 30 à 33, dans lequel l'agencement comporte un moyen permettant de garantir la qualité de service (QoS) dans la partie de réseau ATM/AAL2, en faisant appel à AAL2 CAC.

35. Agencement selon la revendication 31, dans lequel les huit bits de poids faible des objets LABEL_REQUEST et l'objet LABEL avec étendue d'étiquette AAL2 comportent une valeur CID.
